# FASCICULE DE BREVET EUROPEEN

(11) **EP 3 762 209 B1**
(45) Date de publication et mention de la délivrance du brevet: **30.03.2022**
(21) Numéro de dépôt: 19711991.0
(22) Date de dépôt: 26.02.2019
(51) Int. Cl.: B29C 49/56, B29C 49/06

(54) **DOIGT DE VERROUILLAGE POUR UNE UNITE DE MOULAGE DE RECIPIENTS EN MATIERE THERMOPLASTIQUE**
VERRIEGELUNGSFINGER FÜR EINE EINHEIT ZUM FORMEN VON BEHÄLTERN AUS THERMOPLASTISCHEM KUNSTSTOFF
LOCKING FINGER FOR A UNIT FOR MOULDING CONTAINERS MADE OF THERMOPLASTIC MATERIAL

(30) Priorité: 07.03.2018 FR 1851980
(43) Date de publication de la demande: 13.01.2021
(73) Titulaire: Sidel Participations, 76930 Octeville-sur-Mer (FR)
(72) Inventeur: TOUTOUX, Alexandre, 76930 Octeville-sur-mer (FR); HELLOUIN, Damien, 76930 Octeville-sur-mer (FR)
(74) Mandataire: Sidel Group
(86) Numéro de dépôt international: PCT/FR2019/050429
(87) Numéro de publication internationale: WO 2019/170976

(56) Documents cités:
- DE-U1-202016 101 701
- FR-A1- 2 646 802
- FR-A1- 2 945 236

## Description

### DOMAINE TECHNIQUE DE L'INVENTION

L'invention concerne un dispositif de verrouillage pour une unité de moulage de récipients en matière thermoplastique.

### ÉTAT DE LA TECHNIQUE

L'invention concerne plus particulièrement un dispositif de verrouillage pour une unité de moulage de récipients en matière thermoplastique comportant des moyens de verrouillage qui comportent au moins un doigt de verrouillage.

A titre d'exemple non limitatif, le document FR-2.646.802 décrit un exemple d'un tel dispositif de verrouillage pour une unité de moulage de récipients, en particulier des bouteilles.

Il est connu de l'état de la technique de réaliser une lubrification des doigts de verrouillage d'un tel dispositif de verrouillage d'une unité de moulage afin notamment de réduire les frottements survenant lors du verrouillage et par conséquent les phénomènes d'usure associés.

La lubrification des doigts de verrouillage est réalisée en y appliquant un lubrifiant pâteux ou liquide, tel que de la graisse ou de l'huile, mais une telle lubrification présente des inconvénients.

La lubrification nécessite tout d'abord de procéder à un arrêt de la fabrication de récipients pour permettre l'intervention d'un opérateur et ceci avec une fréquence plus ou moins importante.

La lubrification a donc des conséquences économiques, la durée de l'arrêt est d'autant plus importante que le nombre d'unités de moulage est important, par exemple entre 20 et 40 unités sur certaines machines de soufflage dites rotatives.

La lubrification est ensuite à l'origine d'une « souillure » de l'environnement de fabrication des récipients.

En effet, des projections de lubrifiant se produisent notamment sous l'effet de la force centrifuge lorsque les unités de moulage équipent une machine de soufflage rotative.

Or, on recherche d'une manière générale à maintenir un environnement de fabrication des récipients toujours plus propre comme en témoignent les nombreux moyens déployés depuis la protection aéraulique de l'environnement jusqu'à des opérations de décontamination, en particulier de l'unité de remplissage des récipients.

Dans l'état de la technique, les moyens de verrouillage et tout particulièrement les doigts de verrouillage sont principalement réalisés en acier ou alliages d'acier.

Les matériaux métalliques comme l'acier sont pour l'Homme du métier les seuls matériaux présentant des propriétés mécaniques, notamment de résistance, suffisantes compte tenu des efforts importants subis par les moyens de verrouillage lors de la transformation d'une préforme en un récipient par soufflage ou par étirage-soufflage dans le moule d'une unité de moulage. En effet, les pressions de soufflage sont généralement comprises entre 20 et 40 bars, la pression variant en fonction des applications.

C'est la raison pour laquelle, l'Homme du métier a tenté de remédier aux inconvénients liés à la lubrification en recherchant des traitements de surface susceptibles d'être mis en œuvre sur des matériaux métalliques comme l'acier utilisé pour la fabrication des doigts de verrouillage.

On a ainsi réalisé des traitements de surface des doigts de verrouillage en métal, en particulier un traitement de type « DLC », acronyme en anglais de « Diamond Like Carbon ».

Un tel traitement avec des matériaux carbonés consiste généralement à obtenir, sur l'extérieur des doigts de verrouillage, un revêtement sous forme de couches minces déposées par des technologies de dépôt sous vide et destiné à en améliorer les propriétés, notamment pour réduire les frottements et/ou accroître la résistance à l'usure.

Un tel traitement « DLC» ne donne cependant pas satisfaction, d'une part, parce qu'une lubrification reste nécessaire (même si l'on en diminue la fréquence) et, d'autre part, parce qu'un tel traitement est particulièrement coûteux.

De plus, il est difficile de maîtriser avec précision les dimensions des doigts de verrouillage présentant un revêtement de type « DLC », lequel revêtement s'avère de surcroît particulièrement fragile, notamment aux chocs.

C'est la raison pour laquelle, on recherche d'autre solution que les traitements de surface, tels que le traitement « DLC », des doigts de verrouillage.

La demanderesse a ainsi proposé de réaliser les doigts de verrouillage en polyétheréthercétone ou « PEEK », c'est-à-dire un matériau thermoplastique et non plus métallique comme l'acier.

Cependant, une telle solution ne donne pas entière satisfaction. En effet, l'utilisation d'un tel doigt de verrouillage en PEEK est limitée à des applications pour lesquelles la pression de soufflage n'excède pas une pression de l'ordre de 25 bars.

De telles applications correspondent généralement à la fabrication de récipients présentant une faible épaisseur, notamment des bouteilles telles que celles utilisées pour le conditionnement de produit liquide non gazeux comme l'eau.

Ainsi, les doigts de verrouillage en « PEEK » ne peuvent être utilisés pour l'ensemble des applications.

Par conséquent, il existe encore et toujours un besoin de trouver une solution permettant en outre une utilisation des doigts de verrouillage quelles que soient les applications, notamment les applications pour lesquelles la pression de soufflage est supérieure à 25 bars, typiquement de l'ordre de 30 à 40 bars, ou pour des unités de moulage de grandes dimensions, engendrant des efforts de cisaillement des doigts de verrouillage très élevés pour une même pression de soufflage.

La présente invention a notamment pour but de résoudre les inconvénients précités de l'état de la technique et de proposer une solution permettant de supprimer la lubrification des doigts de verrouillage, en particulier tout en résistant à l'usure dans des machine industrielles de moulage de récipients par soufflage ou étirage soufflage.

### BREF RESUME DE L'INVENTION

Selon un premier aspect, l'invention porte un doigt de verrouillage pour unité de moulage, l'unité de moulage comprenant une cavité de moulage du récipient délimitée au moins par une première coquille fixée sur un premier porte-moule et par une deuxième coquille fixée sur un deuxième porte-moule mobile par rapport au premier porte-moule entre une position ouverte et une position fermée, le premier porte-moule comprenant un organe de commande du doigt de verrouillage et le deuxième porte-moule comprenant une ouverture de verrouillage,
le doigt de verrouillage comprenant :
   - une interface d'accouplement mécanique à l'organe de commande, et
   - une portion de verrouillage conçue pour coopérer avec l'ouverture de verrouillage en position fermée,
dans lequel la portion de verrouillage comprend un matériau composite anti-frottement.

L'inventeur s'est rendu compte que le matériau composite permettait d'obtenir une résistance au cisaillement et au choc très élevée avec une bonne résistance à l'usure et le faible coefficient de frottement, et ceci malgré des épaisseurs bien plus réduites que ce que la résistance mécanique d'un matériau anti-frottement procure lorsqu'il est seul. Cette combinaison avantageuse procure, dans le contexte des unités de moulage, un effet surprenant de permettre une très bonne stabilité dimensionnelle en raison notamment de la faible épaisseur de matériaux composite requise.

Dans un premier mode de réalisation de l'invention selon le premier aspect, le doigt de verrouillage est un sous-ensemble de plusieurs pièces mécaniques assemblées rigidement entre elles, incluant :
- un corps principal du doigt comprenant l'interface d'accouplement mécanique, et
- ladite portion de verrouillage qui est une chemise principale assemblée sur le corps principal.

Dans un deuxième mode de réalisation de l'invention selon le premier aspect, ladite portion de verrouillage et l'interface d'accouplement mécanique comprennent tous les deux un matériau composite anti-frottement.

Le deuxième mode de réalisation selon premier aspect de l'invention peut optionnellement présenter notamment les caractéristiques suivantes prises isolément ou en combinaison :
- la portion de verrouillage est une partie d'un bloc en matériau composite, lequel bloc comprend aussi l'interface d'accouplement.
- le doigt comporte au moins un insert monté dans la partie, notamment pour en augmenter la résistance au cisaillement.

Selon un deuxième aspect, l'invention porte un doigt de verrouillage pour unité de moulage, l'unité de moulage comprenant une cavité de moulage du récipient délimitée au moins par une première coquille fixée sur un premier porte-moule et par une deuxième coquille fixée sur un deuxième porte-moule mobile par rapport au premier porte-moule entre une position ouverte et une position fermée, le premier porte-moule comprenant un organe de commande du doigt de verrouillage et le deuxième porte-moule comprenant une ouverture de verrouillage,
le doigt de verrouillage comprenant :
- une interface d'accouplement mécanique à l'organe de commande, et
- une portion de verrouillage conçue pour coopérer avec l'ouverture de verrouillage en position fermée,

Le doigt étant un sous-ensemble de plusieurs pièces mécaniques assemblées rigidement entre elles, incluant :
- un corps principal du doigt comprenant l'interface d'accouplement mécanique, et
- ladite portion de verrouillage qui est une chemise principale en matériau anti-frottement assemblée sur le corps principal.

L'inventeur s'est rendu compte que le fait que la portion du doigt (coopérant avec l'ouverture de verrouillage du porte moule adverse) soit une chemise solide en matériau anti-frottement apportait l'effet surprenant de, non seulement éviter d'utiliser des lubrifiant liquide ou pâteux, mais en plus réduisait l'usure car cela permet une meilleur stabilité dimensionnelle du doigt de verrouillage dans son ensemble, dans le contexte industrielle des machine de moulage par soufflage.

Le fait d'avoir un doigt de verrouillage composé d'une chemise entourant un corps principal permet de spécialiser la conception de la chemise sur la résistance à l'usure et à présenter un faible coefficient de frottement, et de spécialiser la conception du corps principal à la résistance au choc et à aux forces de cisaillement. L'agencement particulier « chemise sur corps principal » permet d'obtenir une bonne stabilité dimensionnelle que les matériaux anti-frottement seuls ne présentent pas lorsqu'ils sont monoblocs, et qu'ils ne présentent pas non plus lorsqu'ils sont déposés en surface seulement.

Dans un mode particulier de réalisation de l'invention selon ce deuxième aspect, la chemise principale peut comprendre un matériau composite anti-frottement.

Chacun des modes de réalisation selon premier ou le deuxième aspect de l'invention peut optionnellement présenter les caractéristiques suivantes prise isolément ou en combinaison :
- ledit matériau composite est un matériau composite à fibres dans lequel des fibres sont noyées dans une matrice en matière plastique.
- ladite matrice en matière plastique comprend du polyétheréthercétone (PEEK) et/ou du polyétherimide (PEI),
- lesdites fibres sont des fibres de verre ou des fibres de carbone, de préférence avec une charge en fibres de 30% ou de 40%,
- le matériau composite est un matériau composite laminé comportant au moins un tissu imprégné d'au moins une résine thermodurcissable, De préférence, le matériau composite laminé comporte un ou des tissus spéciaux, notamment sous la forme d'un enroulement filamentaire.
- le matériau composite comprend au moins un lubrifiant solide,
- le doigt de verrouillage comporte au moins un évidement interne qui s'étend sur au moins une partie du doigt de manière à en réduire la masse.
- le corps principal du doigt est en métal, en particulier en acier ou un alliage d'acier.
- la chemise principale est disposée à une extrémité supérieure du doigt de verrouillage, le doigt de verrouillage comprenant une chemise auxiliaire en matériau composite, disposée à une extrémité inférieure du doigt de verrouillage.
- l'interface d'accouplement mécanique comprend une chemise intérieure en matériau composite, disposée dans un orifice du corps principal du doigt de verrouillage.
- ladite chemise principale et/ou ladite chemise auxiliaire, et/ou ladite chemise intérieure présentent, avant assemblage avec le corps principal, une partie tubulaire solide,
- ladite chemise principale et/ou ladite chemise auxiliaire, et/ou ladite chemise intérieure sont emmanchées en force ou fixée par collage,
- ladite chemise principale et/ou ladite chemise auxiliaire, et/ou ladite chemise (48) intérieure présentent un chanfrein.
- le matériau composite présente un faible coefficient de frottement grâce à quoi toutes les opérations de lubrification du dispositif de verrouillage, notamment des moyens de verrouillage, sont supprimées.
- le matériau composite utilisé pour ladite au moins une chemise est de I'ORKOT^{®} (marque déposée) commercialisé par la société Trelleborg. De manière non limitative, I'ORKOT^{®} est par exemple choisi dans les grades C301 ou encore C410.
- le coefficient de frottement statique du matériau composite de ladite au moins une chemise est inférieur à 0,20, par exemple de l'ordre de 0,10 pour de I'ORKOT^{®} en grade C410.
- le coefficient de frottement dynamique du matériau composite de ladite au moins une chemise est inférieur à 0,15, par exemple de l'ordre de 0,05 pour de I'ORKOT^{®} en grade C410.
- l'organe de commande comprend un galet.

Par définition, le matériau composite est un matériau formé de plusieurs composants élémentaires dont l'association confère à l'ensemble des propriétés qu'aucun des composants pris séparément ne possède.

Avantageusement, le matériau composite est un matériau composite à fibres, c'est-à-dire un matériau dans lequel les fibres sont noyées dans une matrice formée d'une matière plastique, généralement moins résistante que les fibres mais présentant d'autres propriétés comme un faible coefficient de frottement.

Par comparaison avec l'état de la technique, les interventions de lubrification des doigts de verrouillage sont totalement supprimées, grâce à quoi on élimine notamment toute souillure de l'environnement de fabrication des récipients par des projections de lubrifiant.

Avantageusement, on supprime également les coûts associés auxdites interventions de lubrification auparavant nécessaires, des coûts liés à l'arrêt de la fabrication jusqu'aux coûts de main d'œuvre et d'achat des lubrifiants.

Avantageusement, le matériau composite employé pour la fabrication de ladite au moins une chemise du doigt de verrouillage est un matériau composite laminé qui comprend au moins un tissu imprégné d'au moins une résine thermodurcissable et au moins un lubrifiant solide, ledit matériau composite laminé étant par exemple de I'ORKOT^{®}.

### BREVE DESCRIPTION DES FIGURES

D'autres caractéristiques et avantages de la présente invention apparaîtront à la lecture de la description détaillée qui va suivre pour la compréhension de laquelle on se reportera aux dessins dans lesquels :
- la figure 1 est une vue en perspective de trois-quarts qui représente un exemple de réalisation d'un dispositif de verrouillage d'une unité de moulage de récipients en position fermée et qui illustre des doigts de verrouillage d'un tel dispositif comportant au moins une chemise conformément aux enseignements de l'invention ;
- la figure 2 est une vue de face qui représente l'unité de moulage de récipients selon la figure 1 et qui illustre les doigts de verrouillage du dispositif en position verrouillée ;
- la figure 3 est une vue en coupe qui représente le dispositif de verrouillage de l'unité de moulage de récipients selon un plan de coupe C visible sur la figure 1 et qui illustre, comme sur la figure 2, les doigts de verrouillage dudit dispositif en position verrouillée ;
- la figure 4 est une vue de face qui représente l'unité de moulage de récipients selon la figure 1 et qui illustre les doigts de verrouillage du dispositif en position déverrouillée ;
- la figure 5 est une vue en coupe qui représente le dispositif de verrouillage de l'unité de moulage de récipients selon un plan de coupe C visible sur la figure 1 et qui illustre, comme sur la figure 4, les doigts de verrouillage dudit dispositif en position déverrouillée ;
- les figures 6 et 7 sont respectivement une vue de face et une vue en coupe selon un plan VII-VII vertical médian d'orientation transversale illustré sur la figure 8, les vues représentant un doigt de verrouillage pour un dispositif de verrouillage tel que celui de la figure 1 qui est revêtu d'au moins une chemise principale, une chemise auxiliaire et comporte une chemise intérieure;
- les figures 8 et 9 sont respectivement une vue de côté et une vue en coupe, selon un plan IX-IX vertical médian d'orientation longitudinale illustré sur la figure 6, d'un doigt de verrouillage selon les figures 6 et 7 qui est chemisé ici par lesdites chemise supérieure, inférieure et intérieure en matériau composite, et
- les figures 10 à 13 sont respectivement une vue de côté et une vue en coupe, selon respectivement un plan XI-XI vertical médian d'orientation longitudinale illustré sur la figure 12, et un plan XIII-XIII vertical médian d'orientation longitudinale illustré sur la figure 10, d'un doigt de verrouillage dont le corps principal est en matériau composite équipé d'un insert.

### DESCRIPTION DETAILLEE DES FIGURES

Dans la suite de la description, on adoptera à titre non limitatif les orientations longitudinale, verticale et transversale en référence au trièdre (L, V, T) représenté sur les figures.

Par convention, les directions longitudinale et transversale sont déterminées de manière fixe par rapport aux porte-moules d'une unité de moulage de sorte que la position ouverte ou fermée occupée est sans incidence sur lesdites orientations.

On utilisera également à titre non limitatif les termes "avant" et "arrière" en référence à l'orientation longitudinale, ainsi que "supérieur" et "inférieur" en référence à l'orientation verticale et enfin "gauche" ou "droite" et "intérieur" ou "extérieur" en référence à l'orientation transversale.

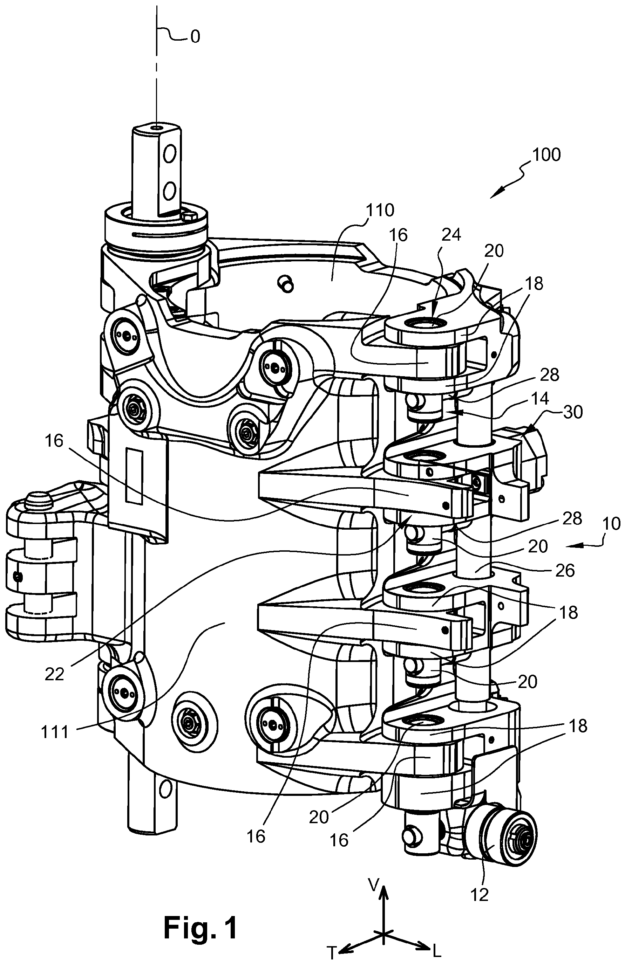

On a représenté sur la figure 1 un exemple de réalisation d'un dispositif **10** de verrouillage pour une unité **100** de moulage de récipients en matière thermoplastique.

De manière connue, une telle unité 100 de moulage est destinée à être montée sur un carrousel d'une machine (non représentée) de fabrication de récipients du type rotative.

En variante, la machine de fabrication de récipients est de type linéaire.

L'unité 100 de moulage constitue alors l'un des postes de moulage de la machine qui comporte une série de "n" unités de moulage, réparties angulairement de manière régulière autour du carrousel de la machine.

Chaque unité 100 de moulage comporte un moule pour la fabrication de récipients par soufflage ou par étirage-soufflage à partir de préformes chaudes en matière thermoplastique.

Pour ce faire l'unité 100 de moulage comporte des moyens de soufflage ou d'étirage-soufflage (non représentés), on se reportera par exemple au document FR-2.764.544 pour de plus amples détails sur de tels moyens.

L'unité 100 de moulage pour formage par soufflage de récipients en matière thermoplastique, comprend le dispositif 10 de verrouillage précité, et une cavité de moulage du récipient délimitée au moins par une première coquille fixée sur un premier porte-moule 110 et par une deuxième coquille fixée sur un deuxième porte-moule 111. Le deuxième porte-moule 111 est mobile par rapport au premier porte-moule 110 entre une position ouverte et une position fermée. L'unité 100 de moulage est représentée sur la figure 1, avec le premier porte-moule 110 illustré à droite et le deuxième porte moule 111 illustré à gauche des figures.

De préférence, l'unité 100 de moulage est supportée par une console destinée à être rapportée à fixation sur un bâti de la machine de moulage.

Plus précisément, les porte-moules 110, 111 sont constitués sous la forme de deux structures porteuses montées pivotantes autour d'un axe O de rotation, l'axe O de rotation s'étendant ici verticalement selon le trièdre (L, V, T).

Chaque porte-moule 110 comporte des moyens d'articulation (non visibles) agencés en arrière, selon la direction longitudinale, de l'unité 100 de moulage.

De préférence, les porte-moules 110, 111 sont susceptibles de s'écarter mutuellement l'un de l'autre en pivotant autour de l'axe O de rotation respectivement entre lesdites positions ouverte et fermée.

En raison de cette cinématique des porte-moules 110, 111, une unité 100 de moulage de ce type est encore appelée moule "portefeuille" (*ou "book-like opening" en anglais*)*.*

A titre d'exemple non limitatif, on se reportera au document FR-2.843.714 qui décrit notamment des moyens de commande pour commander en ouverture/fermeture une unité 100 de moulage de ce type.

Le dispositif 10 de verrouillage de l'unité 100 de moulage comporte au moins un organe **12** de commande des moyens **14** de verrouillage des porte-moules 110, 111.

Le dispositif 10 de verrouillage est agencé longitudinalement en partie avant, soit à l'opposé de l'axe O de rotation et des moyens du dispositif d'ouverture/fermeture de l'unité 100 de moulage.

Le dispositif 10 de verrouillage est destiné à assurer un verrouillage des deux porte-moules 110, 111 en position fermée afin de maintenir l'unité 100 de moulage fermée lors de la fabrication du récipient par soufflage ou par étirage-soufflage d'une préforme.

Dans l'exemple de réalisation, le dispositif 10 de verrouillage comporte deux demi-verrous respectivement de type mâle et de type femelle qui sont associés aux porte-moules 110, 111 et qui sont aptes à coopérer mutuellement pour maintenir l'unité 100 de moulage en position fermée.

Le dispositif 10 de verrouillage a pour fonction d'interdire toute ouverture des porte-moules 110, 111 de manière à maintenir les parties du moule parfaitement jointes, en particulier lors des opérations de transformation par soufflage ou par étirage-soufflage.

Les moyens 14 de verrouillage comprennent un premier demi verrou solidaire du premier porte moule 110, et un deuxième demi verrou solidaire du deuxième porte moule 111. Les demi-verrous comportent chacun au moins une branche saillante, de préférence ici des branches **16** simples pour le demi-verrou du deuxième porte-moule 111 de gauche et des branches **18** doubles pour le demi-verrou du premier porte-moule 110 de droite.

Les branches 16, 18 respectives des demi-verrous sont dirigées transversalement en direction l'une de l'autre et sont mutuellement décalées verticalement de sorte que, en position fermée telle qu'illustrée sur la figure 1, lesdites branches 16 et 18 soient juxtaposées, ici s'interpénètrent.

Ainsi, chaque branche 16 est reçue entre les deux branches 18 qui se positionnent verticalement au-dessus et en dessous.

Chacune des branches 18 du demi-verrou de type mâle supporte à coulissement selon la direction verticale un doigt **20** de verrouillage.

Autrement dit, chacun des doigts 20 de verrouillage est solidaire du premier porte-moule 110 et pour chaque doigt 20 de verrouillage, lesdits moyens 14 de verrouillage comprennent une ouverture 22 de verrouillage solidaire du deuxième porte-moule 111 et associée audit doigt 20 de verrouillage.

Chaque branche 16 du demi-verrou de type femelle comporte une ouverture **22** de verrouillage qui, s'étendant verticalement, traverse ladite branche 16 à son extrémité libre et chaque branche 18 du demi-verrou de type mâle comporte une ouverture **24** de guidage qui, s'étendant verticalement, traverse ladite branche 18 à son extrémité libre.

En position fermée telle qu'illustrée sur la figure 1, les ouvertures 22 et 24 desdites branches 16 et 18 sont alignées selon la direction verticale afin que les doigts 20 de verrouillage puissent les traverser.

Le dispositif 10 de verrouillage comporte ici un nombre total de quatre doigts 20 de verrouillage, en variante non représentée trois doigts 20 de verrouillage.

Le dispositif 10 de verrouillage comporte des moyens **26** d'entraînement qui sont liés en déplacement, ici en coulissement, aux doigts 20 de verrouillage.

Les moyens 14 de verrouillage sont montés mobiles entre au moins une position verrouillée et une position déverrouillée. Plus précisément, les moyens 14 de verrouillage comportent une partie mobile formée par lesdits doigts 20 de verrouillage et une partie fixe formée par les branches 16 et 18 comportant lesdites ouvertures 22 et 24.

Avantageusement, chaque doigt 20 de verrouillage est solidaire d'un bras **28** de liaison qui est lui-même solidaire en déplacement des moyens 26 d'entraînement.

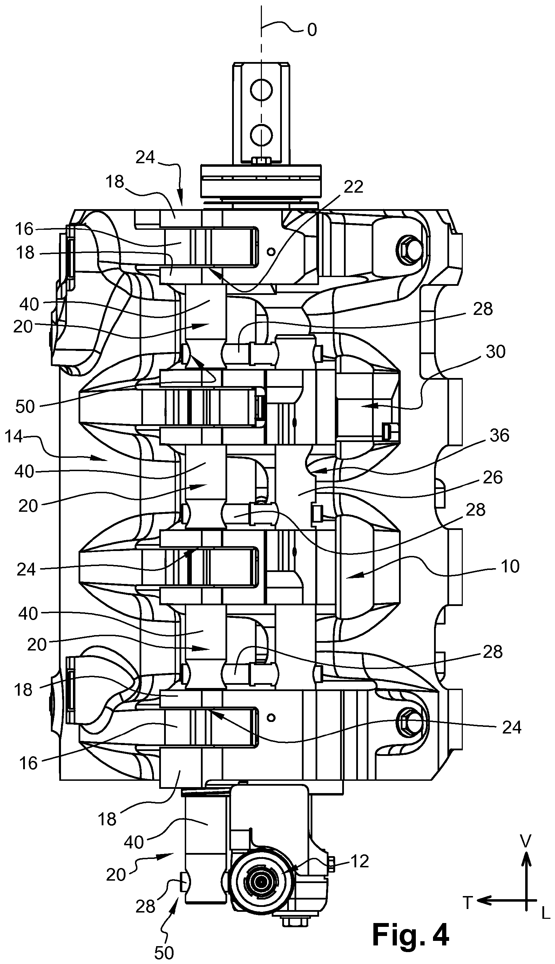

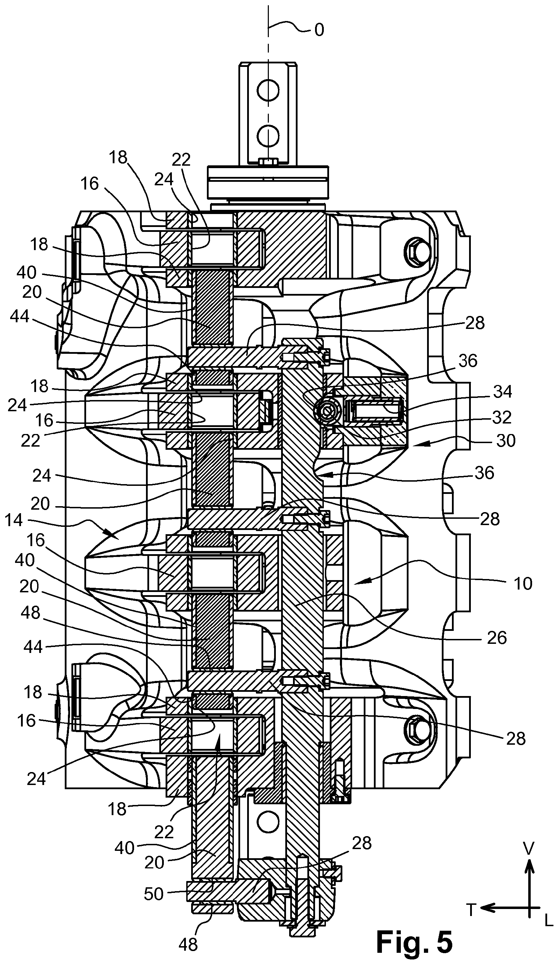

Le coulissement des moyens 26 d'entraînement est commandé par l'organe 12 de commande, respectivement entre la position verrouillée (position haute) représentée sur les figures 1 à 3 et la position déverrouillée (position basse) représentée sur les figures 4 et 5.

De préférence, l'organe 12 de commande est formé par un galet qui est solidaire des moyens 26 d'entraînement. Les moyens 26 d'entraînement sont par exemple constitués par un arbre qui s'étend verticalement.

Dans l'exemple de réalisation, les moyens 14 de verrouillage du dispositif 10 de verrouillage de l'unité 100 de moulage sont montés mobiles entre au moins une position verrouillée dans laquelle les porte-moules 110, 111 de l'unité 100 de moulage sont maintenus en position fermée par lesdits moyens 14 de verrouillage, et une position déverrouillée dans laquelle les porte-moules 110 sont libres d'être écartés de la position fermée vers la position ouverte.

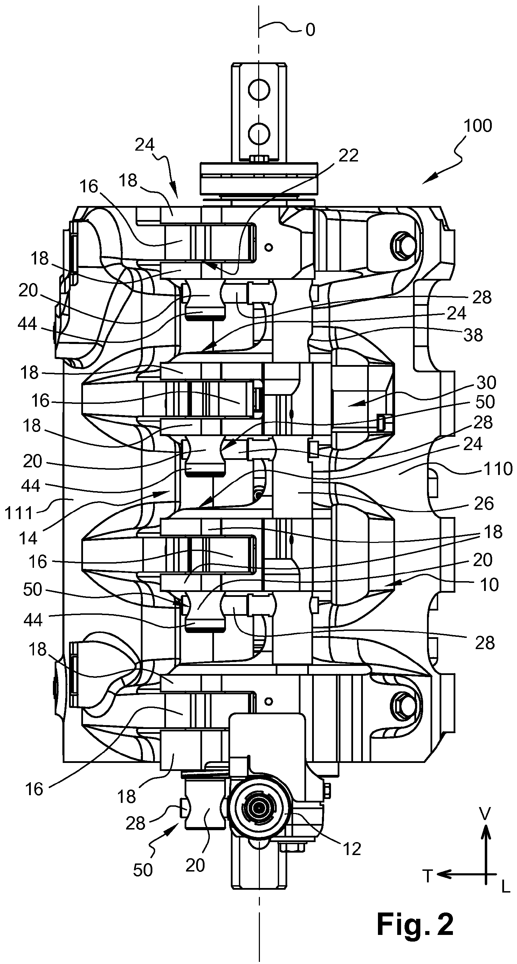

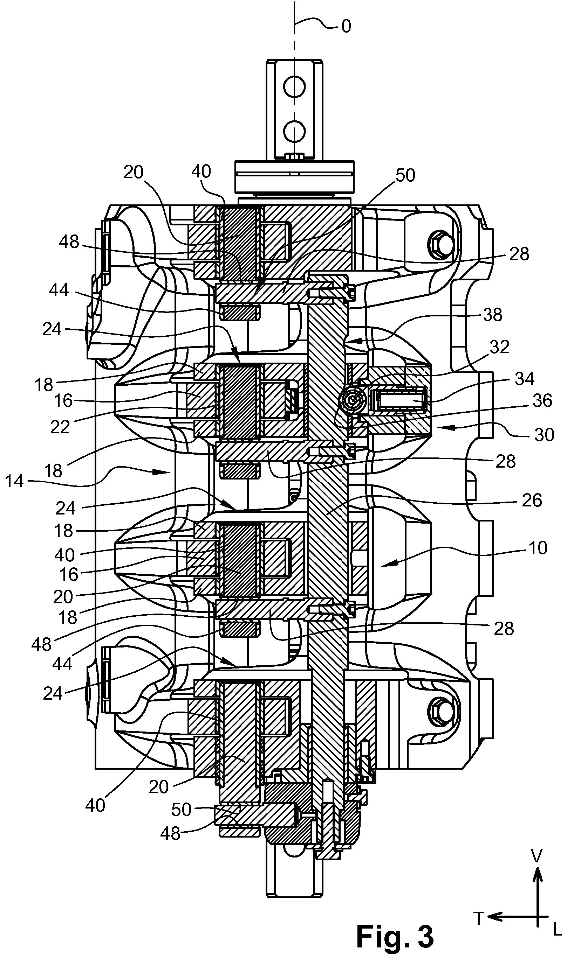

Les figures 2 et 3 illustrent les moyens 14 de verrouillage du dispositif 10 de verrouillage en position verrouillée tandis que les figures 4 et 5 les illustrent en position déverrouillée.

L'organe 12 de commande constitué par le galet est destiné à coopérer avec des moyens à came qui, complémentaires, sont aptes à commander les moyens 14 de verrouillage du dispositif 10 de verrouillage entre lesdites positions verrouillée et déverrouillée.

En variante non représentée, le dispositif 10 de verrouillage peut comporter des moyens de rappel élastique qui sont aptes à rappeler automatiquement les moyens 14 de verrouillage vers l'une desdites positions, avantageusement vers la position verrouillée.

Les moyens de rappel élastique sont par exemple formés par un ressort de rappel qui est traversé centralement par l'arbre formant les moyens 26 d'entraînement et qui prend appui à l'une de ses extrémités sur une coupelle et à l'autre extrémité sur un support fixé aux moyens 26 d'entraînement et portant l'organe 12 de commande.

Avantageusement, l'unité 100 de moulage comporte un mécanisme **30** de blocage qui est associé au dispositif 10 de verrouillage.

Un tel mécanisme 30 de blocage est notamment mais non exclusivement utilisé lorsque le dispositif 10 de verrouillage comporte de tels moyens de rappel élastique des moyens 14 de verrouillage.

Le mécanisme 30 de blocage est alors destiné à permettre un blocage des moyens 14 de verrouillage en position déverrouillée, lesdits moyens 14 de verrouillage, notamment les moyens 26 d'entraînement, étant sinon automatiquement rappelés par les moyens de rappel élastique vers la position verrouillée.

Dans l'exemple de réalisation, le mécanisme 30 de blocage est apte à permettre un blocage des moyens 14 de verrouillage dans chacune des positions, respectivement en position verrouillée et en position déverrouillée.

Le mécanisme 30 de blocage est plus particulièrement visible sur les vues en coupe des figures 3 et 5 qui illustrent respectivement les moyens 14 de verrouillage en position verrouillée et en position déverrouillée.

Avantageusement, le mécanisme 30 de blocage comporte des moyens **32** de blocage, tels qu'un coulisseau, qui sont aptes à être commandés sélectivement entre une position inactive et une position active de blocage dans laquelle lesdits moyens 32 de blocage immobilisent les moyens 14 de verrouillage en position verrouillée ou en position déverrouillée.

De préférence, les moyens 32 de blocage sont rappelés élastiquement vers la position active de blocage par des moyens **34** de rappel élastique, tels qu'un ressort.

Dans l'exemple de réalisation, l'arbre formant les moyens 26 d'entraînement comporte un cran **36** et un cran **38** qui sont destinés à coopérer avec lesdits moyens 32 de blocage, respectivement avec le cran 36 en position verrouillée et avec le cran 38 en position déverrouillée.

Pour de plus amples détails sur la structure et le fonctionnement d'un dispositif 10 de verrouillage comportant un mécanisme 30 de blocage, on pourra par exemple se reporter au document FR-2.646.802 précité.

Les cadences de fabrication des machines de moulage de récipients en matière thermoplastique, tels que des bouteilles en PET, sont particulièrement élevées.

En effet, en fonction du nombre d'unités 100 de moulage de la machine et des caractéristiques des bouteilles fabriquées, en particulier leur contenance, les cadences de fabrication des machines de moulage varient par exemple de 20.000 bph (bouteilles par heure) environ jusqu'à plus de 90.000 bph.

Par conséquent, la résistance à l'usure de pièces comme les doigts 20 de verrouillage du dispositif 10 de verrouillage est particulièrement importante pour garantir la fiabilité de fonctionnement des moyens 14 de verrouillage.

Or les sollicitations des doigts 20 de verrouillage sont importantes compte-tenu de la répétition à de telles cadences de verrouillage et de déverrouillage successifs de chaque unité 100 de moulage, l'unité 100 de moulage alternant position fermée et position ouverte au cours du cycle de fabrication d'un récipient comme une bouteille.

C'est la raison pour laquelle, on cherche des solutions pour réduire notamment les frottements entre chaque doigt 20 de verrouillage et lesdites ouvertures 22, 24, c'est-à-dire ici respectivement avec l'ouverture 22 de verrouillage de la branche 16 et les ouvertures 24 de guidage aménagées dans les branches 18, et ce faisant en limiter l'usure.

En effet, une usure des doigts 20 de verrouillage est en outre susceptible de provoquer l'apparition de jeu en position verrouillée du dispositif 10 de verrouillage et ce faisant un écartement des parties du moule lors de la fabrication du récipient ainsi que des efforts de cisaillement sur le doigt.

Un tel jeu peut conduire dans les récipients fabriqués par l'unité 100 de moulage à des défauts au niveau du plan de joint.

Tel qu'expliqué en préambule, la solution connue de l'état de la technique consiste à réaliser périodiquement une lubrification des doigts 20 de verrouillage avec de la graisse ou de l'huile afin de limiter les frottements et subséquemment l'usure des doigts 20 de verrouillage.

Toutefois, une telle lubrification présente de nombreux inconvénients depuis la souillure de l'environnement de fabrication par les lubrifiants utilisés jusqu'aux coûts induits par les interventions de lubrification qui nécessitent un arrêt de la fabrication et des moyens humains, sans compter également l'achat des produits de lubrification.

Pour remédier à ces problèmes, l'invention propose une nouvelle conception selon laquelle le dispositif 14 de verrouillage comporte au moins un doigt 20 de verrouillage qui est un sous-ensemble de plusieurs pièces mécaniques assemblées rigidement entre elles. Le doigt 20 comprend en particulier un corps **21** du doigt et au moins une chemise **40** en matériau anti-frottement. Ladite chemise avant assemblage avec le corps (21) principal présentant une partie tubulaire solide. Autrement dit, le doigt 20 de l'invention se distingue en particulier d'un doigt qui serait simplement revêtu d'un revêtement lubrifiant, ou un revêtement présentant un coefficient de frottement réduit. En effet, l'inventeur s'est aperçu que de manière surprenante, en particulier dans une atmosphère à humidité difficile à contrôler, mais pas seulement, on maitrise mieux la stabilité dimensionnelle de pièces mécaniques initialement précises que l'on ne sait maitriser une épaisseur importante, résistant à l'usure, obtenue par dépôt, peinture ou équivalant.

Grâce à ladite au moins une chemise 40 en matériau composite anti-frottement, on évite une lubrification des moyens 14 de verrouillage à l'aide de graisse ou d'huile.

Le matériau composite de ladite au moins une chemise est un matériau formé de plusieurs composants élémentaires dont l'association confère à l'ensemble des propriétés qu'aucun des composants pris séparément ne possède.

Selon un premier exemple de matériau composite, le matériau composite est un matériau composite à fibres dans lequel les fibres sont noyées dans une matrice formée par exemple d'une matière plastique.

Un matériau composite à fibres est un matériau dans lequel les fibres sont noyées dans une matrice formée d'une matière plastique, généralement moins résistante que les fibres mais présentant d'autres propriétés tel qu'en particulier un faible coefficient de frottement.

Les fibres peuvent être orientées pour présenter un angle déterminé, notamment en fonction des efforts, les fibres étant par exemple orientées d'un angle de 45°.

De préférence, les fibres utilisées sont des fibres de verre ou fibres de carbone pour augmenter sa rigidité, sa résistance aux efforts de cisaillement.

La matrice dudit matériau composite à fibres comporte du polyétheréthercétone (PEEK) ou encore du polyétherimide (PEI).

Selon un exemple, le matériau composite à fibres comprend du polyétheréthercétone (PEEK) qui est chargé en fibres telles que des fibres de verre ou des fibres de carbone, notamment avec une charge en fibres de l'ordre de 30% ou 40%.

Selon un autre exemple, le matériau composite à fibres comprend du polyétherimide (PEI) qui est chargé en fibres telles que des fibres de verre ou des fibres de carbone, notamment avec une charge en fibres de l'ordre de 30% ou 40%.

Avantageusement, le matériau composite comprenant du PEI ou autre est chargé en composés lubrifiants solides, tels que du polytétrafluoréthylène (PTFE) ou du polyphénylène sulfide (PPS).

Le dispositif 14 de verrouillage selon l'exemple comporte quatre doigts 20 de verrouillage comportant chacun au moins une chemise 40 en matériau composite.

Dans la suite, la description faite pour un doigt 20 de verrouillage vaut (sauf indication contraire) à l'identique pour chacun des doigts 20 formant les moyens 14 de verrouillage.

Avantageusement, le matériau composite utilisé pour ladite au moins une chemise 40 présente un faible coefficient de frottement grâce à quoi les opérations de lubrification du dispositif 10 de verrouillage, notamment des moyens 14 de verrouillage, sont supprimées.

Selon un deuxième exemple de matériau composite, le matériau composite utilisé pour former ladite au moins une chemise est un matériau composite laminé.

Un tel matériau composite laminé est fabriqué à partir d'au moins un tissu imprégné par exemple d'au moins une résine thermodurcissable et comporte avantageusement au moins un lubrifiant solide.

Ledit au moins un tissu du matériau composite laminé est par exemple réalisé sous la forme d'un enroulement filamentaire.

A titre d'exemple d'un tel matériau composite laminé pour fabriquer ladite au moins une chemise, on utilise avantageusement de I'ORKOT^{®} (marque déposée) qui est commercialisé par la société Trelleborg.

On peut sélectionner différents grades d'ORKOT^{®} pour fabriquer ladite au moins une chemise, à titre d'exemples non limitatifs les grades C301 ou C410 d'ORKOT^{®} sont susceptibles d'être utilisés.

L'ORKOT^{®} n'est toutefois qu'un exemple nullement limitatif de matériau composite susceptible d'être utilisé pour ladite au moins une chemise.

Le doigt 20 de verrouillage comporte au moins une chemise 40, dite supérieure, en matériau composite.

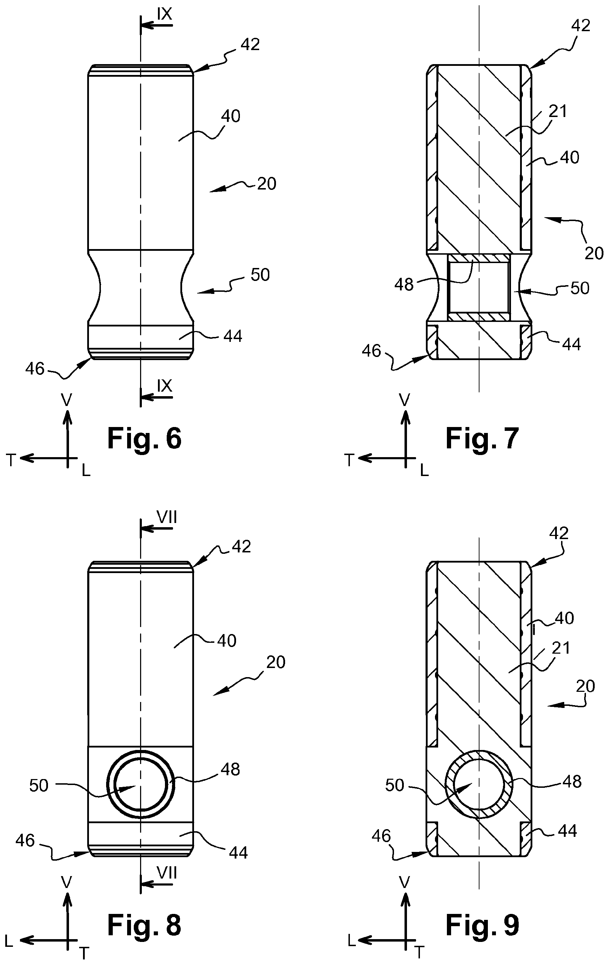

Comme illustré notamment sur les figures 6 à 9, la partie supérieure du doigt 20 de verrouillage est revêtue à l'extérieur d'au moins une chemise 40 supérieure en matériau composite.

Tel qu'illustré sur les figures 2 et 3 qui représentent les moyens 14 de verrouillage en position verrouillée, la chemise 40 supérieure d'un doigt 20 de verrouillage coopère avec chacune des ouvertures 22 et 24 desdits moyens 14 de verrouillage.

En position verrouillée, la chemise 40 supérieure de chaque doigt 20 est reçue dans l'ouverture 22 de verrouillage de la branche 16 simple et dans l'ouverture 24 de guidage de chacune des branches 18 doubles.

En fonctionnement, chaque doigt 20 de verrouillage est susceptible de pénétrer dans lesdites ouvertures 22 et 24 lorsque les moyens 14 de verrouillage sont entraînés, ici en coulissement, de la position déverrouillée vers la position verrouillée et réciproquement.

Grâce à la chemise 40 supérieure en matériau composite choisi pour présenter un faible coefficient de frottement, les doigts 20 peuvent coulisser dans les ouvertures 22 et 24 sans qu'il ne soit plus nécessaire de recourir à une lubrification comme cela était le cas auparavant.

De préférence, la chemise 40 supérieure en matériau composite comporte au moins un chanfrein **42** ou tout moyen équivalent. Le chanfrein 42 est réalisé dans un bord supérieur de la chemise 40 et s'étend circonférentiellement.

Avantageusement, le chanfrein 42 de la chemise 40 supérieure facilite l'introduction de l'extrémité libre du doigt 20 de verrouillage dans lesdites ouvertures 22 et 24 lors du verrouillage de l'unité 100 de moulage par le dispositif 10 de verrouillage.

Tel qu'illustré sur les figures 4 et 5 qui représentent les moyens 14 de verrouillage en position déverrouillée, ledit au moins un doigt 20 de verrouillage comporte au moins une chemise **44,** dite inférieure, en matériau composite.

La chemise 44 inférieure est agencée à l'extérieur de la partie inférieure du doigt 20 de verrouillage.

Par comparaison avec la chemise 40 supérieure, la chemise 44 inférieure intervient non pas en position verrouillée mais en position déverrouillée.

En effet et comme on peut tout particulièrement le voir sur la coupe de la figure 5 illustrant la position déverrouillée, la chemise 44 inférieure du doigt 20 de verrouillage coopère avec l'ouverture 24 de guidage de celle des branches 18 double qui, adjacente, est située juste en dessous.

En position verrouillée, ladite ouverture 24 de la branche 18 adjacente coopère avec la partie supérieure d'un autre doigt 20 de verrouillage que celui dont la partie inférieure revêtue de la chemise 44 inférieure qui y pénètre en position déverrouillée.

De préférence, les quatre doigts 20 de verrouillage sont identiques pour en standardiser la fabrication.

Avantageusement, les quatre doigts 20 de verrouillage comportent ainsi au moins une chemise 40 supérieure.

Cependant, le quatrième doigt 20 des moyens 14 de verrouillage qui est le plus bas, ici situé à côté de l'organe 12 de commande, ne comporte avantageusement pas de chemise 44 inférieure.

En effet et comme on peut notamment le voir sur les figures 4 et 5, la partie inférieure de ce doigt 20 de verrouillage n'est pas reçue dans une ouverture 24 de guidage en position déverrouillée.

Avantageusement, la coopération de l'extrémité inférieure d'un doigt 20 de verrouillage, ici des trois autres doigts 20, avec une ouverture 24 de guidage permet d'assurer une fonction d'anticouple pour éviter une rotation des moyens 26 d'entraînement sous l'effet de la force centrifuge.

Grâce à la chemise 44 inférieure que comporte les doigts 20 de verrouillage, on limite l'usure des doigts 20 dont on facilite l'introduction dans les ouvertures 24 de guidage sans devoir recourir à une quelconque lubrification.

La présence de la partie inférieure d'au moins l'un des doigts 20 de verrouillage dans l'une des ouvertures 24 de guidage permet de conserver l'alignement des doigts 20 de verrouillage selon la direction verticale correspondant au coulissement entre les positions verrouillée et déverrouillée.

A défaut d'assurer une telle fonction d'anti-couple, les moyens 14 de verrouillage sont susceptibles de subir des efforts dommageables résultant de défauts d'alignement ou de coaxialité des doigts 20 de verrouillage avec lesdites ouvertures 22 et 24 lors d'un verrouillage.

En variante non représentée, la fonction d'anti-couple est assurée par d'autres moyens de guidage, distincts des moyens 14 de verrouillage, de sorte que les doigts 20 de verrouillage ne sont alors pas configurés pour venir s'insérer dans une ouverture 24 de guidage en position déverrouillée.

Dans une telle variante, la chemise 44 inférieure peut avantageusement être supprimée.

Par comparaison à d'autres moyens susceptibles d'être utilisés pour assurer une telle fonction d'anti-couple, le fait qu'au moins l'un des doigts 20 soit configuré pour venir coopérer avec une ouverture 24 de guidage en position déverrouillée présente des avantages.

En effet, un tel doigt 20 permet de limiter de manière substantielle la masse embarquée sur l'unité 100 de moulage pour assurer cette fonction d'anti-couple et ce faisant de réduire les problèmes liées à l'inertie lors du fonctionnement.

Tel que plus particulièrement illustré par la figure 5, la partie inférieure d'au moins l'un des doigts 20 de verrouillage est configurée pour venir s'insérer dans l'ouverture 24 qui est située en dessous lorsque le dispositif 10 de verrouillage est manœuvré de la position verrouillée vers la position déverrouillée.

Avantageusement, chaque doigt 20 de verrouillage assurant une fonction d'anti-couple comporte une partie inférieure revêtue extérieurement d'une chemise 44 inférieure.

De préférence, la chemise 44 inférieure en matériau composite comporte au moins un chanfrein **46** ou tout autre moyen équivalent.

Le chanfrein 46 est réalisé dans un bord inférieur de la chemise 44 et s'étend circonférentiellement.

Avantageusement, un tel chanfrein 46 facilite l'introduction de la chemise 44 inférieure du doigt 20 dans l'ouverture 24 de guidage lors du déverrouillage.

Le chanfrein 46 de la chemise 44 inférieure, comme le chanfrein 42 de la chemise 40 supérieure, permettent avantageusement de récupérer également en fonctionnement des tolérances et autres légers défauts d'alignement entre les doigts 20 de verrouillage et les ouvertures 22, 24 des branches 16, 18.

De préférence, ledit au moins un doigt 20 de verrouillage comporte également une autre chemise **48,** dite intérieure, en matériau composite qui est logée à l'intérieur d'un orifice **50** du doigt 20 de verrouillage.

Tel qu'illustré sur les figures 6 à 9, l'orifice 50 est situé verticalement entre la chemise 40 supérieure et la chemise 44 inférieure et traverse le doigt 20 de verrouillage, transversalement de part en part.

Dans l'exemple, les moyens 26 d'entraînement sont liés en déplacement audit au moins un doigt 20 de verrouillage par l'intermédiaire du bras 28 de liaison dont une extrémité est solidaire desdits moyens 26 d'entraînement et dont l'autre extrémité est reçue à l'intérieur de ladite chemise 48 en matériau composite logée dans l'orifice 50 du doigt 20 de verrouillage.

Chaque bras 28 de liaison est ainsi solidaire à une extrémité desdits moyens 26 d'entraînement et à l'autre extrémité du doigt 20 de verrouillage.

Avantageusement, la chemise 48 évite un contact acier / acier entre le doigt 20 de verrouillage et le bras 28 de liaison et ce faisant permet de supprimer toute lubrification alors qu'elle était auparavant nécessaire au niveau de cette liaison.

De préférence, ladite au moins une chemise 40, 44, 48 est emmanchée en force ou fixée par collage sur le doigt 20 de verrouillage.

Le doigt 20 de verrouillage est préférentiellement en métal, en particulier en acier ou un alliage d'acier.

Avantageusement, le doigt 20 de verrouillage présente de bonnes propriétés mécaniques, en particulier de résistance au cisaillement.

Selon une variante non représentée, ledit au moins un doigt 20 de verrouillage comporte au moins un évidement qui s'étend par exemple à l'intérieur et sur tout ou au moins une partie du doigt 20 de manière à en réduire la masse.

De préférence, ledit au moins un évidement est réalisé centralement dans la partie supérieure du doigt 20 de verrouillage.

Grâce un tel évidemment, on améliore le fonctionnement d'une machine de moulage de type rotative comportant des telles unités 100 de moulage en limitant les problèmes liés à l'inertie et qui résultent des vitesses d'entraînement en rotation du carrousel nécessaire pour atteindre des cadences de fabrication toujours plus élevées.

On a représenté en détail sur les figures 6 à 9, un exemple de réalisation d'un tel doigt 20 de verrouillage comportant au moins une chemise en matériau composite à faible coefficient de frottement, préférentiellement ici comportant les trois chemises 40, 44 et 48.

Dans l'exemple de réalisation, le doigt 20 de verrouillage présente globalement une forme cylindrique.

De même, la chemise 40 supérieure, la chemise 44 inférieure et la chemise 48 intérieure présentent globalement une forme cylindrique de bague. Les trois chemises 40, 44 et 48 que comporte le doigt 20 de verrouillage sont tubulaires.

Un tel doigt 20 de verrouillage revêtu d'au moins une chemise en matériau composite est notamment, mais non exclusivement, susceptible d'être monté dans un dispositif 10 de verrouillage du type de celui décrit précédemment en référence à la figure 1 et suivantes, lequel dispositif 10 de verrouillage n'est cependant donné qu'à titre d'exemple non limitatif.

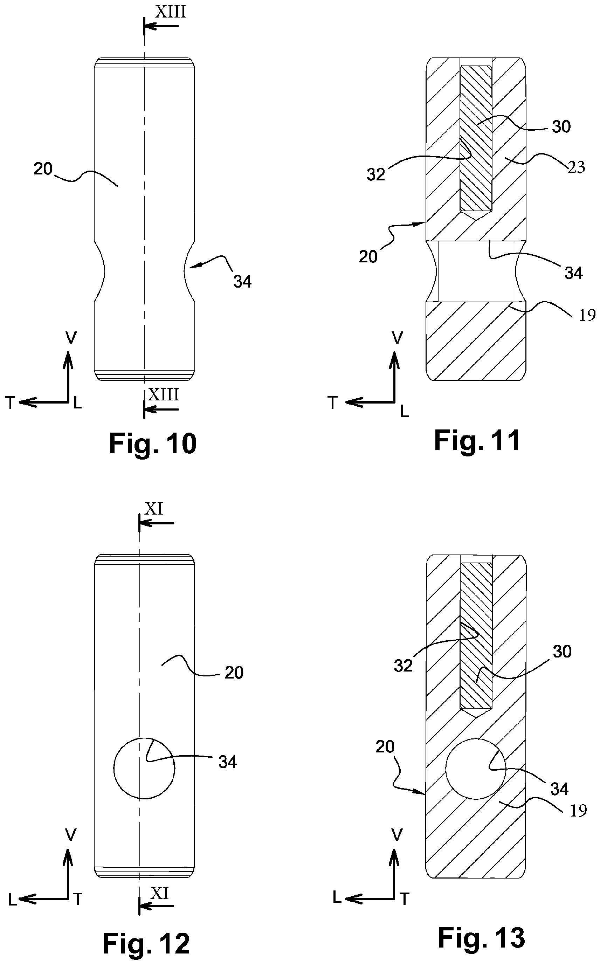

Les modes de réalisation illustrés aux figures 10 à 13 vont maintenant être décrits. Selon les précédents modes de réalisation, le doigt 20 de verrouillage comprenaient un corps principal raccordé à l'organe 12 de commande distinct de la chemise en matériau anti-frottement. Dans les modes de réalisations illustrés aux figures 10 à 13, les parties du doigt 20 de verrouillage réalisées dans un matériau composite anti-frottement comprennent à la fois une portion 23 qui coopère avec l'ouverture 22 de verrouillage et une portion 19 raccordé à l'organe 12 de commande.

Avantageusement, ledit matériau composite employé est notamment un matériau composite à fibres ou matériau composite laminé selon les deux exemples de réalisation qui viennent d'être décrits.

Le doigt 20 de verrouillage en matériau composite anti-frottement est notamment, mais non exclusivement, susceptible d'être monté dans un dispositif 10 de verrouillage du type de celui décrit précédemment en référence à la figure 1 et qui n'est donné qu'à titre d'exemple non limitatif.

Lorsque le doigt 20 de verrouillage est en matériau composite comme dans le premier mode de réalisation, le doigt 20 de verrouillage comporte alors avantageusement au moins un insert 30 de manière à augmenter la résistance au cisaillement du doigt 20 de verrouillage.

Tel qu'illustré par les vues en coupe des figures 3 et 5, ledit au moins un insert 30 est agencé à l'intérieur du doigt 20 de verrouillage.

Dans l'exemple illustré sur les figures 2 à 5, le doigt 20 de verrouillage présente globalement une forme cylindrique et l'insert 30 s'étend suivant un axe principal du doigt 20.

L'insert 30 est agencé au centre du doigt 20 de verrouillage suivant ledit axe principal et s'étend ici suivant la direction verticale, c'est à dire selon la direction de coulissement du doigt 20 de verrouillage entre lesdites positions verrouillée et déverrouillée.

Dans l'exemple de réalisation, le doigt 20 de verrouillage comporte préférentiellement un seul insert 30 présentant une forme générale de goupille.

De préférence, l'insert 30 est en métal. Avantageusement, l'insert 30 est en acier ou dans un alliage d'acier.

L'insert 30 est monté dans un logement 32 interne qui est ménagé dans le doigt 20 de verrouillage. Le logement 32 de l'insert 30 est un trou borgne qui est par exemple obtenu par un perçage du doigt 20 de verrouillage.

L'insert 30 est par exemple emmanché en force dans ledit logement 32. En variante, l'insert 30 est fixé par collage à l'intérieur du logement 32 ou par tout autre moyen équivalent permettant de le bloquer, l'immobiliser en position à l'intérieur du logement 32.

Dans l'exemple de réalisation, le logement 32 interne s'étend sur au moins une partie du doigt 20 de verrouillage.

L'insert 30 s'étend verticalement sur une partie du doigt 20 de verrouillage correspondant au moins à la partie du doigt 20 qui pénètre en position verrouillée dans les ouvertures 22 et 24 des branches 16 et 18.

Le doigt 20 de verrouillage comporte un orifice 34 dans lequel est montée une extrémité du bras 28 de liaison avec l'arbre formant les moyens 26 d'entraînement. L'orifice 34 est réalisé dans l'autre partie du doigt 20 de verrouillage ne comportant pas ledit insert 30.

Le logement 32 s'étend verticalement, suivant l'axe principal du doigt 20 de verrouillage, globalement de l'une inférieure de ses extrémités jusqu'au voisinage de l'autre partie du doigt 20 de verrouillage comportant ledit orifice 34.

Chaque bras 28 de liaison est ainsi solidaire à une extrémité desdits moyens 26 d'entraînement et à l'autre extrémité du doigt 20 de verrouillage.

Un doigt 20 de verrouillage en matériau composite anti-frottement présente une masse bien inférieure à celle d'un doigt 20 de verrouillage réalisé en acier.

Un doigt 20 de verrouillage selon l'invention permet donc de réduire la masse totale d'une unité 100 de moulage équipée d'un dispositif 10 de verrouillage comportant de tels doigts 20 de verrouillage en matériau composite.

On améliore donc également le fonctionnement d'une machine de moulage de type rotative comportant des telles unités 100 de moulage en limitant les problèmes liés à l'inertie et qui résultent des vitesses d'entraînement en rotation du carrousel nécessaire pour atteindre des cadences de fabrication toujours plus élevées.

Avantageusement, ledit au moins un doigt 20 en matériau composite comporte au moins un chanfrein.

De préférence et tel qu'illustré sur les figures 2 à 5, ledit au moins un doigt 20 en matériau composite comporte un chanfrein ménagé à chacune de ses extrémités, respectivement supérieure et inférieure, et qui s'étend circonférentiellement de manière continue.

Avantageusement, le chanfrein supérieur facilite l'introduction de l'extrémité libre du doigt 20 de verrouillage dans lesdites ouvertures 22 et 24 lors du verrouillage de l'unité 100 de moulage par le dispositif 10 de verrouillage.

Avantageusement, le chanfrein inférieur facilite l'introduction du doigt 20 dans l'ouverture 24 lors du déverrouillage.

## Revendications

1. Doigt (20) de verrouillage pour unité de moulage, l'unité de moulage comprenant une cavité de moulage du récipient délimitée au moins par une première coquille fixée sur un premier porte-moule (110) et par une deuxième coquille fixée sur un deuxième porte-moule (111) mobile par rapport au premier porte-moule (110) entre une position ouverte et une position fermée, le premier porte-moule (110) comprenant un organe (12) de commande du doigt (20) de verrouillage et le deuxième porte-moule (111) comprenant une ouverture (22) de verrouillage,
le doigt (20) de verrouillage comprenant :
- une interface (19) d'accouplement mécanique à l'organe (12) de commande, et
- une portion de verrouillage conçue pour coopérer avec l'ouverture (22) de verrouillage en position fermée,
**caractérisé en ce que** la portion de verrouillage comprend un matériau composite anti-frottement.

2. Doigt (20) selon la revendication 1, **caractérisé en ce que** ledit matériau composite est un matériau composite à fibres dans lequel des fibres sont noyées dans une matrice en matière plastique.

3. Doigt (20) selon la revendication 2, **caractérisé en ce que** ladite matrice comprend au moins une matière plastique prise parmi un groupe comprenant du polyétheréthercétone (PEEK) et du polyétherimide (PEI),
et/ou **en ce que** lesdites fibres sont des fibres de verre ou des fibres de carbone, de préférence avec une charge en fibres de 30% ou de 40%.

4. Doigt (20) selon la revendication 2 ou 3, **caractérisé en ce que** le matériau composite est un matériau composite laminé comportant au moins un tissu imprégné d'au moins une résine thermodurcissable,
et/ou **en ce que** le matériau composite comprend au moins un lubrifiant solide.

5. Doigt (20) selon l'une des revendications 2 à 4, **caractérisé en ce que** le doigt (20) de verrouillage comporte au moins un évidement interne qui s'étend sur au moins une partie du doigt (20) de manière à en réduire la masse.

6. Doigt (20) selon l'une des revendications 1 à 5, **caractérisé en ce qu'**il est un sous-ensemble de plusieurs pièces mécaniques assemblées rigidement entre elles, incluant :
- un corps (21) principal du doigt comprenant l'interface (19) d'accouplement mécanique, et
- ladite portion de verrouillage qui est une chemise (40) principale assemblée sur le corps (21) principal.

7. Doigt (20) selon la revendication 6, **caractérisé en ce que** le corps (21) principal du doigt (20) est en métal, en particulier en acier ou un alliage d'acier.

8. Doigt (20) selon la revendication 6 ou 7, **caractérisé en ce que** la chemise (40) principale est disposée à une extrémité supérieure du doigt (20) de verrouillage, le doigt (20) de verrouillage comprenant une chemise (44) auxiliaire en matériau composite, disposée à une extrémité inférieure du doigt (20) de verrouillage.

9. Doigt (20) selon l'une des revendications 6 à 8 ; **caractérisé en ce que** l'interface (19) d'accouplement mécanique comprend une chemise (48) intérieure en matériau composite, disposée dans un orifice (50) du corps (21) principal du doigt (20) de verrouillage.

10. Doigt (20) selon l'une des revendications 6 à 9 , **caractérisé en ce qu'**au moins l'une des chemises prises parmi : ladite chemise (40) principale, ladite chemise (44) auxiliaire, ou ladite chemise (48) intérieure :
- présente, avant assemblage avec le corps (21) principal, une partie tubulaire solide.

11. Doigt (20) selon l'une des revendications 1 à 5, **caractérisé en ce que** ladite portion de verrouillage et l'interface (19) d'accouplement mécanique comprennent tous les deux un matériau composite anti-frottement.

12. Doigt (20) selon la revendication 11, **caractérisé en ce que** la portion de verrouillage est une partie (23) d'un bloc en matériau composite, lequel bloc comprend aussi l'interface (19) d'accouplement.

13. Doigt (20) selon la revendication 11 ou 12, **caractérisé en ce qu'**il comporte au moins un insert (30) monté dans la partie (23), notamment pour en augmenter la résistance au cisaillement.

14. Unité (100) de moulage pour formage par soufflage de récipients en matière thermoplastique, comprenant :
- une cavité de moulage du récipient délimitée au moins par une première coquille fixée sur un premier porte-moule (110) et par une deuxième coquille fixée sur un deuxième porte-moule (111), lequel deuxième porte-moule (111) est mobile par rapport au premier porte-moule (110) entre une position ouverte et une position fermée,
- un organe (12) de commande solidaire du premier porte-moule (110),
- au moins un doigt (20) de verrouillage **selon l'une des revendications précédentes,** chacun des au moins un doigt (20) de verrouillage étant accouplé à l'organe (12) de commande par son interface (19) d'accouplement mécanique,
dans laquelle, pour chacun des au moins un doigt (20) de verrouillage, le deuxième porte-moule (111) comprend une ouverture (22) de verrouillage agencée en position fermée pour recevoir la portion de verrouillage dudit doigt (20) de verrouillage.

15. Unité (100) de moulage selon la revendication 14, **caractérisée en ce que** l'organe (12) de commande est agencé pour commander sélectivement des moyens (14) de verrouillage entre au moins une position verrouillée et une position déverrouillée, la portion de verrouillage coopérant avec l'ouverture (22) de verrouillage lorsque les premiers (110) et deuxièmes (111) portesmoule sont en position fermée et que les moyens (14) de verrouillage sont en position verrouillée.

16. Unité (100) de moulage selon la revendication 14 dépendant de la revendication 6, **caractérisée en ce que** le premier porte-moule (110) comprend pour chaque doigt de verrouillage deux ouverture (24) de guidage associées audit doigt (20) de verrouillage, lequel doigt (20) de verrouillage est mobile en translation entre une position déverrouillée dans laquelle le doigt (20) de verrouillage ne coopère pas avec l'ouverture (22) de verrouillage et une position verrouillée dans laquelle la chemise (40) principale coopère avec l'ouverture (22) de verrouillage et avec les deux ouvertures (24) de guidage associées, situées de part et d'autre de l'ouverture (22) de verrouillage.

17. Unité (100) de moulage selon les revendications 14 et 16 prises dans leur ensemble et dépendant de la revendication 8, **caractérisée en ce que** ladite chemise (44) auxiliaire d'un doigt (20) de verrouillage donné coopère, en position déverrouillée, avec une ouverture de guidage associée à un doigt de verrouillage adjacent audit doigt (20) de verrouillage.

## Patentansprüche

1. Verriegelungsfinger (20) für eine Formungseinheit, wobei die Formungseinheit einen Formungshohlraum für den Behälter umfasst, der mindestens durch eine erste Schale, die an einem ersten Formträger (110) befestigt ist, und durch eine zweite Schale, die an einem zweiten Formträger (111) befestigt ist, der in Bezug auf den ersten Formträger (110) zwischen einer geöffneten Stellung einer geschlossenen Stellung beweglich ist, begrenzt wird, wobei der erste Formträger (110) ein Betätigungsorgan (12) für den Verriegelungsfinger (20) umfasst und der zweite Formträger (111) eine Verriegelungsöffnung (22) umfasst, wobei der Verriegelungsfinger (20) umfasst:
- eine Grenzfläche (19) zur mechanischen Kopplung mit dem Betätigungsorgan (12) und
- einen Verriegelungsabschnitt, der dazu ausgelegt ist, mit der Verriegelungsöffnung (22) in der geschlossenen Stellung zusammenzuwirken,
**dadurch gekennzeichnet, dass** der Verriegelungsabschnitt einen reibungsverhindernden Verbundwerkstoff umfasst.

2. Finger (20) nach Anspruch 1, **dadurch gekennzeichnet, dass** der Verbundwerkstoff ein Faserverbundwerkstoff ist, in dem Fasern in eine Matrix aus Kunststoff eingebettet sind.

3. Finger (20) nach Anspruch 2, **dadurch gekennzeichnet, dass** die Matrix mindestens einen Kunststoff aus einer Gruppe umfasst, die Polyetheretherketon (PEEK) und Polyetherimid (PEI) umfasst, und/oder dadurch, dass die Fasern Glasfasern oder Kohlenstofffasern sind, bevorzugt mit einer Faserfüllung von 30 % oder 40 %.

4. Finger (20) nach Anspruch 2 oder 3, **dadurch gekennzeichnet, dass** der Verbundwerkstoff ein laminierter Verbundwerkstoff ist, der mindestens ein mit mindestens einem wärmehärtbaren Harz getränktes Gewebe enthält, und/oder dadurch, dass der Verbundwerkstoff mindestens einen festen Schmierstoff umfasst.

5. Finger (20) nach einem der Ansprüche 2 bis 4, **dadurch gekennzeichnet, dass** der Verriegelungsfinger (20) mindestens eine innere Ausnehmung beinhaltet, die sich über mindestens einen Teil des Fingers (20) erstreckt, so dass dessen Masse verringert wird.

6. Finger (20) nach einem der Ansprüche 1 bis 5, **dadurch gekennzeichnet, dass** er eine Baugruppe aus mehreren untereinander starr gefügten mechanischen Teilen ist, die beinhaltet:
- einen Hauptkörper (21) des Fingers, der die Grenzfläche (19) zur mechanischen Kopplung umfasst, und
- den Verriegelungsabschnitt, der ein Hauptmantel (40) ist, der an den Hauptkörper (21) gefügt ist.

7. Finger (20) nach Anspruch 6, **dadurch gekennzeichnet, dass** der Hauptkörper (21) des Fingers (20) aus Metall ist, insbesondere aus Stahl oder einer Stahllegierung.

8. Finger (20) nach Anspruch 6 oder 7, **dadurch gekennzeichnet, dass** der Hauptmantel (40) an einem oberen Ende des Verriegelungsfingers (20) angeordnet ist, wobei der Verriegelungsfinger (20) einen Hilfsmantel (44) aus Verbundwerkstoff umfasst, der an einem unteren Ende des Verriegelungsfingers (20) angeordnet ist.

9. Finger (20) nach einem der Ansprüche 6 bis 8, **dadurch gekennzeichnet, dass** die Grenzfläche (19) zur mechanischen Kopplung einen Innenmantel (48) aus Verbundwerkstoff umfasst, der in einer Öffnung (50) des Hauptkörpers (21) des Verriegelungsfingers (20) angeordnet ist.

10. Finger (20) nach einem der Ansprüche 6 bis 9, **dadurch gekennzeichnet, dass** mindestens einer der Mäntel unter: dem Hauptmantel (40), dem Hilfsmantel (44) oder dem Innenmantel (48):
- vor dem Zusammenfügen mit dem Hauptkörper (21) einen festen rohrförmigen Teil aufweist.

11. Finger (20) nach einem der Ansprüche 1 bis 5, **dadurch gekennzeichnet, dass** der Verriegelungsabschnitt und die Grenzfläche (19) zur mechanischen Kopplung beide einen reibungsverhindernden Verbundwerkstoff umfassen.

12. Finger (20) nach Anspruch 11, **dadurch gekennzeichnet, dass** der Verriegelungsabschnitt ein Teil (23) eines Blocks aus Verbundwerkstoff ist, wobei der Block auch die Grenzfläche (19) zur Kopplung umfasst.

13. Finger (20) nach Anspruch 11 oder 12, **dadurch gekennzeichnet, dass** er mindestens einen Einsatz (30) beinhaltet, der in dem Teil (23) montiert ist, insbesondere, um dessen Scherfestigkeit zu erhöhen.

14. Formungseinheit (100) zum Blasformen von Behältern aus thermoplastischem Material, umfassend:
- einen Formungshohlraum für den Behälter, der mindestens durch eine erste Schale, die an einem ersten Formträger (110) befestigt ist, und durch eine zweite Schale, die an einem zweiten Formträger (111) befestigt ist, begrenzt wird, wobei der zweite Formträger (111) in Bezug auf den ersten Formträger (110) zwischen einer geöffneten Stellung und einer geschlossenen Stellung beweglich ist,
- ein Betätigungsorgan (12), das mit dem ersten Formträger (110) fest verbunden ist,
- mindestens einen Verriegelungsfinger (20) nach einem der vorhergehenden Ansprüche, wobei jeder der mindestens ein Verriegelungsfinger (20) mit dem Betätigungsorgan (12) über seine Grenzfläche (19) zur mechanischen Kopplung gekoppelt ist,
in der, für jeden der mindestens ein Verriegelungsfinger (20), der zweite Formträger (111) eine Verriegelungsöffnung (22) umfasst, die in geschlossener Stellung dazu gestaltet ist, den Verriegelungsabschnitt des Verriegelungsfingers (20) aufzunehmen.

15. Formungseinheit (100) nach Anspruch 14, **dadurch gekennzeichnet, dass** das Betätigungsorgan (12) dazu gestaltet ist, Verriegelungsmittel (14) zwischen mindestens einer verriegelten Stellung und einer entriegelten Stellung selektiv zu betätigen, wobei der Verriegelungsabschnitt mit der Verriegelungsöffnung (22) zusammenwirkt, wenn die ersten (110) und zweiten (111) Formträger in geschlossener Stellung sind und die Verriegelungsmittel (14) in verriegelter Stellung sind.

16. Formungseinheit (100) nach Anspruch 14 abhängig von Anspruch 6, **dadurch gekennzeichnet, dass** der erste Formträger (110) für jeden Verriegelungsfinger zwei Führungsöffnungen (24) umfasst, die dem Verriegelungsfinger (20) zugeordnet sind, wobei der Verriegelungsfinger (20) zwischen einer entriegelten Stellung, in welcher der Verriegelungsfinger (20) nicht mit der Verriegelungsöffnung (22) zusammenwirkt, und einer verriegelten Stellung, in welcher der Hauptmantel (40) mit der Verriegelungsöffnung (22) und mit den beiden zugeordneten Führungsöffnungen (24), die beidseits der Verriegelungsöffnung (22) gelegen sind, zusammenwirkt, translatorisch beweglich ist.

17. Formungseinheit (100) nach Anspruch 14 und 16 zusammengenommen und abhängig von Anspruch 8, **dadurch gekennzeichnet, dass** der Hilfsmantel (44) eines gegebenen Verriegelungsfingers (20) in der entriegelten Stellung mit einer Führungsöffnung zusammenwirkt, die einem zum Verriegelungsfinger (20) benachbarten Verriegelungsfinger zugeordnet ist.

## Claims

1. Locking finger (20) for a molding unit, the molding unit comprising a container molding cavity delimited at least by a first shell fixed onto a first mold-holder (110) and by a second shell fixed onto a second mold-holder (111) that can move relative to the first mold-holder (110) between an open position and a closed position, the first mold-holder (110) comprising a member (12) for controlling the locking finger (20) and the second mold-holder (111) comprising a locking opening (22),
the locking finger (20) comprising:
- an interface (19) for mechanically coupling to the control member (12), and
- a locking portion designed to cooperate with the locking opening (22) in closed position,
**characterized in that** the locking portion comprises an anti-friction composite material.

2. Finger (20) according to Claim 1, **characterized in that** said composite material is a composite material with fibers in which fibers are embedded in a matrix of plastic material.

3. Finger (20) according to Claim 2, **characterized in that** said matrix comprises at least one plastic material taken from among a group comprising polyetheretherketone (PEEK) and polyetherimide (PEI),
and/or **in that** said fibers are glass fibers or carbon fibers, preferably with a 30% or 40% fiber filling.

4. Finger (20) according to Claim 2 or 3, **characterized in that** the composite material is a laminated composite material comprising at least one fabric impregnated with at least one thermosetting resin,
and/or **in that** the composite material comprises at least one solid lubricant.

5. Finger (20) according to one of Claims 2 to 4, **characterized in that** the locking finger (20) comprises at least one internal recess which extends over at least a part of the finger (20) so as to reduce the weight thereof.

6. Finger (20) according to one of Claims 1 to 5, **characterized in that** it is a subassembly of several mechanical parts rigidly assembled with one another, including:
- a main body (21) of the finger comprising the mechanical coupling interface (19), and
- said locking portion which is a main sleeve (40) assembled on the main body (21).

7. Finger (20) according to Claim 6, **characterized in that** the main body (21) of the finger (20) is made of metal, in particular of steel or a steel alloy.

8. Finger (20) according to Claim 6 or 7, **characterized in that** the main sleeve (40) is disposed at a top end of the locking finger (20), the locking finger (20) comprising an auxiliary sleeve (44) made of composite material, disposed at a bottom end of the locking finger (20) .

9. Finger (20) according to one of Claims 6 to 8, **characterized in that** the mechanical coupling interface (19) comprises an internal sleeve (48) made of composite material, disposed in an orifice (50) of the main body (21) of the locking finger (20).

10. Finger (20) according to one of Claims 6 to 9, **characterized in that** at least one of the sleeves taken from among: said main sleeve (40), said auxiliary sleeve (44), or said internal sleeve (48):
- has, before assembly with the main body (21), a solid tubular part.

11. Finger (20) according to one of Claims 1 to 5, **characterized in that** said locking portion and the mechanical coupling interface (19) both comprise an anti-friction composite material.

12. Finger (20) according to Claim 11, **characterized in that** the locking portion is a part (23) of a block made of composite material, which block also comprises the coupling interface (19).

13. Finger (20) according to Claim 11 or 12, **characterized in that** it comprises at least one insert (30) mounted in the part (23), notably to increase the shear strength thereof.

14. Molding unit (100) for blow-forming containers made of thermoplastic material, comprising:
- a container molding cavity delimited at least by a first shell fixed onto a first mold-holder (110) and by a second shell fixed onto a second mold-holder (111), which second mold-holder (111) can move relative to the first mold-holder (110) between an open position and a closed position,
- a control member (12) secured to the first mold-holder (110),
- at least one locking finger (20) **according to one of the preceding claims,** each of the at least one locking finger (20) being coupled to the control member (12) by its mechanical coupling interface (19), wherein, for each of the at least one locking finger (20), the second mold-holder (111) comprises a locking opening (22) arranged in closed position to receive the locking portion of said locking finger (20).

15. Molding unit (100) according to Claim 14, **characterized in that** the control member (12) is arranged to selectively control locking means (14) between at least a locked position and an unlocked position, the locking portion cooperating with the locking opening (22) when the first (110) and second (111) mold-holders are in closed position and the locking means (14) are in locked position.

16. Molding unit (100) according to Claim 14 when dependent on Claim 6, **characterized in that** the first mold-holder (110) comprises, for each locking finger, two guiding openings (24) associated with said locking finger (20), which locking finger (20) can move in translation between an unlocked position in which the locking finger (20) does not cooperate with the locking opening (22) and a locked position in which the main sleeve (40) cooperates with the locking opening (22) and with the two associated guiding openings (24), situated on either side of the locking opening (22).

17. Molding unit (100) according to Claims 14 and 16 taken together and when dependent on Claim 8, **characterized in that** said auxiliary sleeve (44) of a given locking finger (20) cooperates, in unlocked position, with a guiding opening associated with a locking finger adjacent to said locking finger (20).
